# EUROPEAN PATENT SPECIFICATION

(11) **EP 2 547 625 B1**
(45) Date of publication and mention of the grant of the patent: **12.08.2015**
(21) Application number: 09810823.6
(22) Date of filing: 16.12.2009
(51) Int. Cl.: C02F 1/461, C02F 1/467, C25B 9/02

(54) **MULTI-CHAMBER ELECTROLYTIC CELL**
ELEKTROLYSEZELLE MIT MEHREREN KAMMERN
CELLULE ÉLECTROLYTIQUE À CHAMBRES MULTIPLES

(43) Date of publication of application: 23.01.2013
(73) Proprietor: CM Ventures Ltd, Offaly (IE); Carragher, Geoff, Offaly (IE); Kophamel, Jeff, Roscommon (IE); Carragher, Patrick, Offaly (IE)
(72) Inventor: CARRAGHER, Geoff, Offaly (IE); KOPHAMEL, Jeff, Roscommon (IE); CARRAGHER, Patrick, Offaly (IE)
(74) Representative: O'Connor, Michael Donal
(86) International application number: PCT/IB2009/007941
(87) International publication number: WO 2011/073714

(56) References cited:
- EP-A2- 1 538 128
- WO-A2-2009/067213
- KR-A- 20050 022 496
- US-A- 5 980 703
- US-A- 5 985 110
- US-A- 6 033 539

## Description

### Technical Field

This disclosure relates to chemical technologies, particularly concerning the issues of modular electrolytic cells used to purify and disinfect water.

### Background

In the field of applied electrochemistry, electrolytic cells are used either for water treatment or to produce water disinfectant solutions. For instance, one such prior art electrolytic cell (a.k.a. "electrolyzer") is described in U.S. App. Pub. No. 2008/0264781. This cell contains co-axial cylindrical-rod and tubular electrodes and a co-axial diaphragm separating the inter-electrode space into two electrode chambers, anode and cathode. The tube acts as the cathode and the cylinder acts as the anode. The cavity between the cylinder and the diaphragm serves as an anolyte ("anode") chamber, while the cavity between the diaphragm and the tube serves as a catholyte ("cathode") chamber. Each electrode has it own terminal contact for connecting to a DC-voltage supply. As a result, the cell requires one electrical terminal per chamber. The outer wall of the anode is covered in a dielectric coating to prevent an electrical discharge and contact hazard. The co-axial components are sealed and held in position through the use of non-identical, ridged dielectric end caps. Each cap has two ports, one connecting to the anode chamber and the other connecting to the cathode chamber.

The invention claimed has improvements over the prior art systems. One of them is the overall space occupied by an electrolyzer system. Often, in order to produce sufficient amounts of disinfectant, electrolyzer systems require multiple electrolytic cells that are connected in parallel (i.e. a bank of cells). With each cell occupying a fixed volume, the overall space required by the multi-cell electrolyzer system increases proportionately with the number of cells.

Another shortcoming of the cell disclosed in the 2008/0264781 application is that it requires one electrical terminal per electrode. Because terminal connections can often overheat and fail due to the high electrical current flowing through them, there is a need to reduce the overall number of terminals per chamber in an electrolysis system. EP1538128 discloses an end cap for an electrolytic cell. The cell comprises two tubular electrodes with a cylindrical membrane arranged co-axially between them.

One objective of the present invention is to maximize the amount of electrolyzed solution a cell can produce while minimizing the material required to produce the cell.

A second objective is to simplify the parts required in an electrolytic cell in order to increase reliability.

A third objective is minimizing the overall footprint of a cell in order to save installation space.

A fourth objective is to use electrolysis to make a water disinfectant that can provide sufficient bacteria-kill ratios without creating significant amounts of by-products.

Another objective of the present invention is to treat contaminated water directly in the cell, without any additives.

Another objective is to make a fully automated electrolysis system that can be finely tuned at all stages of the electrolysis process to control the properties of the resulting anolyte and catholyte solutions.

### Drawings

Figure 1 is an isometric view of the preferred embodiment of the multi-chamber electrolytic cell of the present invention.
Figure 2 is a cross-sectional view of a preferred embodiment of the multi-chamber electrolytic cell of the present invention.
Figure 3 is a cross-sectional view of another embodiment of the multi-chamber electrolytic cell of the present invention.
Figures 4(a) and 4(b) are flow circuits that can be achieved using the multi-chamber electrolytic cell of the present invention.
Figure 5 is a diagram of an automated electrolytic plant.
Figure 6 is a flow chart of the automated process for producing a disinfectant using the automated plant.

### Detailed Description

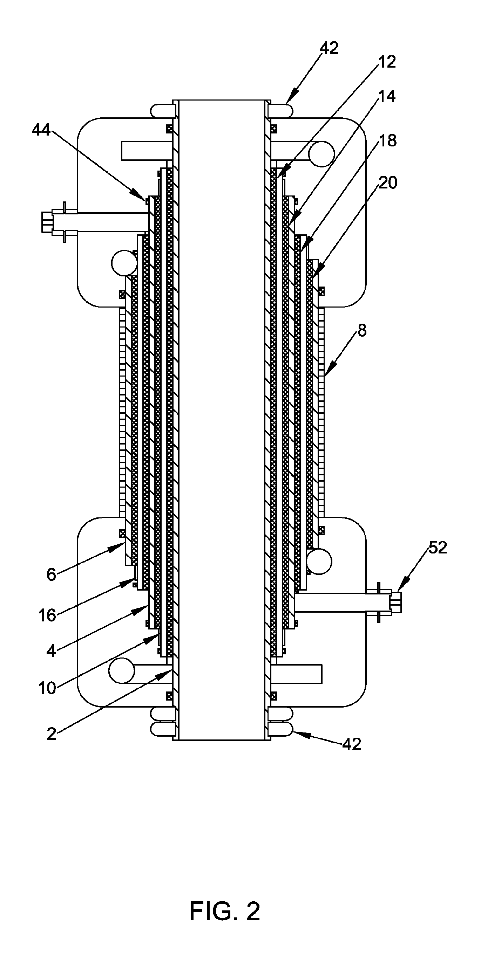

Figure 2 illustrates a cut-away of a preferred embodiment of the multi-chamber electrolytic cell of the present invention. The electrolytic cell is assembled from three electrodes:
(i) an inner electrode 2 having a cylindrical shape is a tube that serves as the first cathode; (ii) a middle electrode 4 having a cylindrical shape that is a tube that serves as a common anode; and (iii) an outer electrode 6 having a cylindrical shape that is a tube that serves as a second cathode. The electrodes are made from grade-2 titanium or some other low resistivity metal in order to minimize electrical resistance.

The first cathode and inner wall of the anode make up a first half of the cell while the outer wall of the anode and the second cathode make up a second half of the cell. Because the anode acts as both the outer wall of the first half of the cell and the inner wall of the second half of the cell, the number of components and the amount of material required to produce the complete cell is reduced. This in turn reduces manufacturing costs, as there is less material to purchase and less time required for assembly. In an alternate embodiment the polarity of the multiple electrodes may be reversed so the cell consists of a first anode, middle cathode, and second anode.

To avoid electrical contact hazard, the outer cathode is coated in a dielectric material 8, such as polyolefin. A first cylindrical diaphragm 10 is placed between the first cathode 2 and the anode 4 to form a first chamber 12 and second chamber 14 in the first half-cell. A second cylindrical diaphragm 16 is placed between the anode 4 and the second cathode 6 to form a third chamber 18 and fourth chamber 20 in the second half-cell. The diaphragms are of sufficient permeability to allow for the required ion exchange. In the preferred embodiment, the diaphragms are made of a ceramic material such as zirconia ceramic.

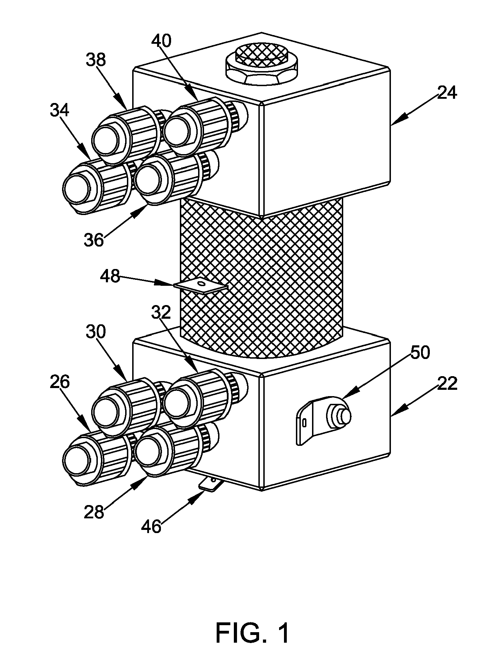

Figure 1 illustrates an isometric view of an electrolytic cell of the present invention. All five cylindrical components are positioned co-axially with the use of a first monolithic dielectric end-cap 22 and a second monolithic dielectric end-cap 24. The first end-cap 22 has a first flow-port (reference No. 26), a second flow-port (reference No. 28), a third flow-port (reference No. 30), and a fourth flow-port (reference No. 32) communicating with each of the four flow chambers at the bottom of Fig. 1. The second end-cap 24 has its own first flow-port (reference No. 34), a second flow-port (reference No. 36), a third flow-port (reference No. 38), and a fourth flow-port (reference No. 40) communicating with each of the four flow chambers at the top of Fig. 1. The end-caps are held in place through the use of threading on the ends of the first cathode 2 and custom nuts 42. In the preferred embodiment both dielectric end-caps are identical in order to reduce costs and simplify assembly. This also reduces costs for the end-users in the event the cell requires a repair. The sides of the end-caps are also threaded to provide a mounting facility for multiple cell systems.

During operation, the inner electrode 2 and the middle electrode 4 have a first voltage across them, and the middle electrode 4 and the outer electrode 6 have a second voltage across them. Each of the first and second voltages is of sufficient value to enable an electrolytic reaction in their respective half-cells. Although in the preferred embodiment, the first and second voltages are equal, they do not have to be.

In the preferred embodiment, sealing of the three electrodes and the two diaphragms to create the four separate chambers is accomplished by machining grooves in the cell end-caps. The grooves are machined to the specified dimensions of the electrodes and diaphragms and tight tolerances are applied. Sealing-rings 44 are placed in between the respective ends of the electrodes and diaphragms and each of the end-caps. In the preferred embodiment, the sealing-rings are X-rings made from Nitrile 70 shore, Viton, or EPDM. The electrodes have a sealing surface finish of approximately 1.6 Ra. When the sealing surface finish, sealing rings, and grooves are combined, flow rates in excess of 20 liters/min and operating pressures in excess of 10 bar can be achieved.

Moreover, because the present invention effectively combines one two-chamber cell with another two-chamber cell, it reduces the area required for a four-chamber system. Thus, more chambers can be put into use and more electrolysis can be achieved in a smaller space.

As can be seen from Figures 1 and 2, a first cathode terminal 46 is attached to the end of the first cathode 2 using a standard nut 42. A second cathode terminal 48 is welded to the outer wall of the second cathode 38. In the preferred embodiment, the cathode terminals are made from titanium. An access parameter for an anode terminal 50 is drilled and tapped through the side of the first cap 22 to contact the anode 4 and held in place via a set screw 52. These terminals provide connection points to complete the electrical circuit between the anode and each of the cathodes. The electrode terminals are often points of failure on an electrolytic cell due to the heat build up caused by resistance to the electric current.

The idea is to use an electrode to generate electrolytic reactions on both sides of the electrode, thus reducing the electrodes/chamber ratio in a given cell. Because the present invention reduces the number of electrodes, and, as a result, also reduces the number of electrical contacts. For example, because prior art two-chamber cells require two separate terminal, a two-chamber cell pair requires four separate terminals (one terminal per chamber). In contrast, the present invention requires less than one terminal per chamber, e.g., only three terminals for a four-chamber cell of the present invention. By eliminating one terminal, as well as a one electrode, the present invention increases the overall reliability of the device. Table 1 below shows the preferred materials and dimensions of the components of the preferred embodiment of the present invention.

**Table 1**

| Description | Material | Size |
|---|---|---|
| End Cap | Dielectric material | 90 x 80 x 45 |
| Inner Cathode | Titanium Grade 2, Tube | OD 37.5 x ID 33.8 x 280 Lg |
| Anode | Titanium, Tube | OD 60.3 x ID 54.8 x 190.5 Lg |
| Outer Cathode | Titanium, Tube | OD 88.9 x ID 82.8 x 116 Lg |
| Inner Diaphragm | Zirconia Ceramic, Tube | (OD 2.0 in. x ID 1 .75 in. 8.6 in Lg) OD 0.0508m x ID 0.0445m. 0.2184m Lg |
| Outer Diaphragm | Zirconia Ceramic, Tube | (OD 2.88 in. x ID 2.625 in. x 6.0 in Lg) OD 0.0732m x ID 0.0667m x 0.1524m Lg |

In another embodiment, the inner electrode can also be a solid rod.

In addition, instead of having two cathode electrodes and one anode electrode, the four-chamber cell can use two anode electrodes and one cathode electrode.

Moreover, while the preferred embodiment is a four-chamber cell, the present invention can also be applied to construct a cell with more than four chambers by adding additional diaphragms and electrodes.

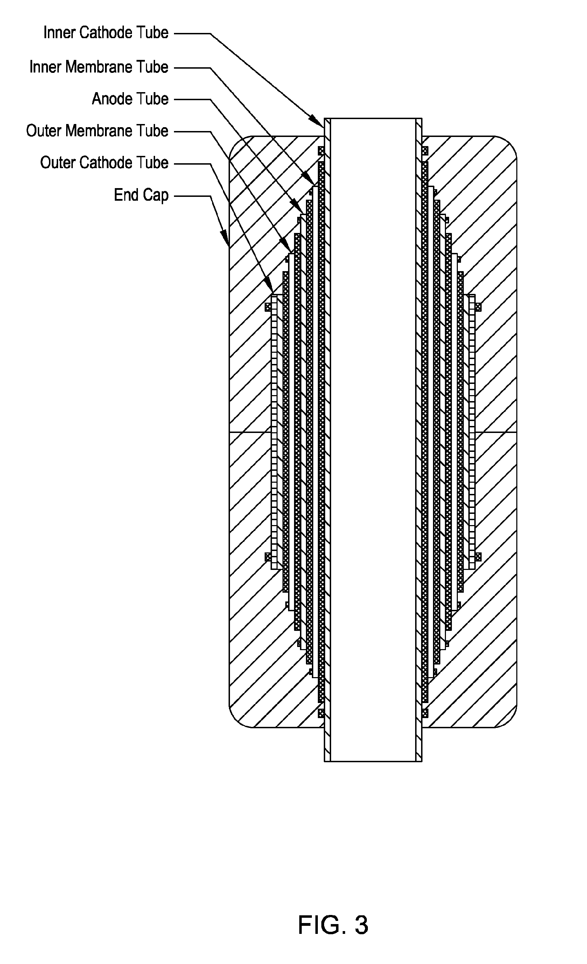

In addition, instead of having the outer shell of the electrolytic cell be an outer electrode coated with a dielectric coating, the outer shell (housing) can be made out of a rigid dielectric housing, in which case the outer electrode would be positioned inside the housing and would not need a dielectric coating. In one embodiment, the end-caps can be extended towards each other to form the rigid dielectric housing as shown in Figure 3.

In another embodiment where the outer shell is made out of a rigid dielectric housing, instead of having cylindrically shaped electrodes and diaphragms, the electrodes and diaphragms could be flat plates extending between the housing's inner walls and separating the inner space of the housing into multiple chambers. 1

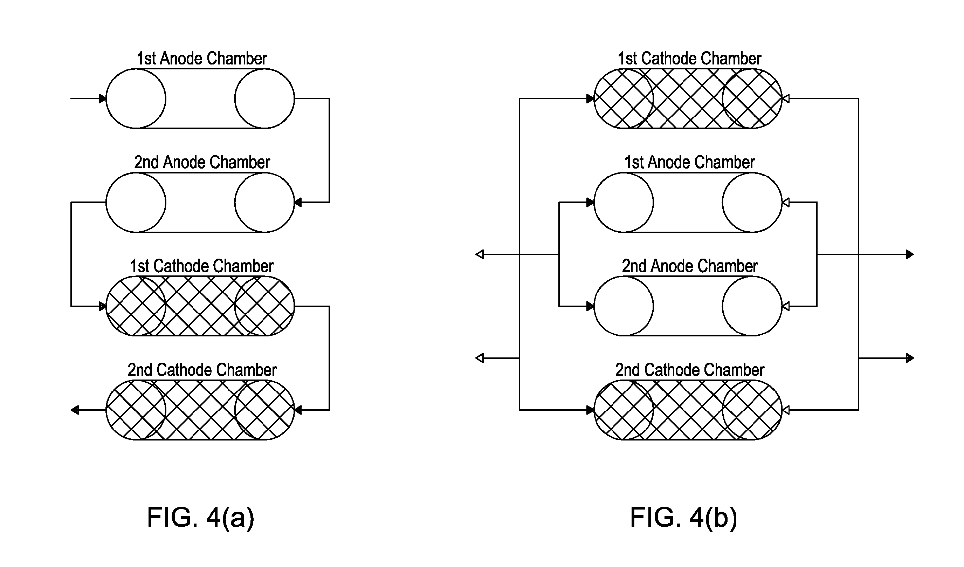

In any cell of the present invention, the individual chambers can be utilized in a multitude of different configurations. Any number of chambers may be run in series with each other, in parallel with each other, or in any combination of the above. Both the top and bottom ports of the chambers may be used as inlets or outlets for the flow. Moreover, the flows can be partially diverted from one chamber into other chambers or other areas of the system. Figure 4 shows some of the flow configurations possible with a four-chamber cell. For example, figure 4(a) shows a series connection of chambers where the fluid flows through the first anode, then through the second anode, then through the first cathode, and finally through the second cathode.

In contrast, figure 4(b) shows how a four-chamber cell can be used with the chambers in parallel to achieve a different flow. Two flows go into each of the first and second anodes and come out as a single anolytic flow, while two separate flows going into each of the first and second cathodes come out as a single catholytic flow. This use of multiple chambers in parallel allows a user to increase the volume of fluid being processed.

One possible method of use of the four-chamber electrolytic cell is the creation of disinfectant for dosing into waste water. In the preferred embodiment, a low concentration brine solution (e.g., about 2%-5% NaCl, which is directly proportional to the conductivity of the brine solution) is pumped into one of the cathode chambers of the cell to produce a catholyte flow which has a high pH and low oxidation reduction potential ("ORP"). As the ORP of a fluid increases, it is able to kill more bacteria. After the flow passes through the cathode chamber, only a portion of the flow is redirected into the corresponding anode chamber. In the preferred embodiment, only about 80% of the flow is fed into the corresponding anode chamber. By only directing a portion of the flow back into the cell, the flow is slowed and a higher rate of reaction is achieved, thus raising the ORP. As the diverted fluid passes through the anode chamber it becomes an anolyte with a controlled pH and higher ORP. The anolytic fluid now contains hypochlorous acid which acts as a disinfectant to kill bacteria. In the preferred embodiment, the resulting disinfectant solution will have a high ORP (e.g., about 850-1200 mV) and a pH that is neutral or close-to-neutral ( e.g., about 6.5-7.2).

In the preferred method of use, the disinfectant is dosed into waste water in order to disinfect it and kill harmful bacteria. A number of considerations can affect this dosing. Typically, waste water treatment systems are required to reduce the amount of bacteria in waste water by a factor of 1000. If the disinfectant dose is too low, the disinfectant will not be able to sufficiently reduce the bacterial count. On the other hand, if the disinfectant dose is too high, dosing will create too many byproducts in the water, which may be harmful to the environment.

A dose providing for about 0.5 ppm (e.g., 0.6 ppm) of mixed oxidants in the final mixture will produce the required bacteria kill-ratio and minimize the creation of harmful byproducts and any detriment to the environment. For example this 0.5 ppm can be achieved by making a disinfectant solution having about 500 ppm of mixed oxidants and dosing it into the waste water in a volumetric ratio of between about 0.1% and 0.15%.

Another method of use for the four-chamber electrolytic cell is the disinfecting of contaminated water within the cell to create potable water without the addition of NaCl. By pumping only the contaminated water itself through the cell, the present invention eliminates the requirement to dose the contaminated water with any additives. The ability to decontaminate water in an electrolytic cell without adding NaCl, or anything else, to the starting solution is made possible by the fact that contaminated water already contains positive and negative ions.

In the preferred embodiment, the decontamination process works as follows. The flow of contaminated water is pumped into a cathode chamber to raise the pH of the water. It then flows through an anode chamber, which raises the ORP and lowers the pH of the flow, killing the bacteria. The flow then passes through a second cathode chamber in order to bring the pH back to neutral or close to neutral (e.g. 6.5-7.2) and to reduce the ORP close to a neutral level.

Alternatively, as long the contaminated solution passes through at least one anode chamber for decontamination purposes, depending on the required ORP of the decontaminated water, the flow sequence can utilize two cell chambers only. For example, the flow sequence could be limited to an "anode chamber-cathode chamber" sequence or a "cathode chamber-anode chamber" sequence.

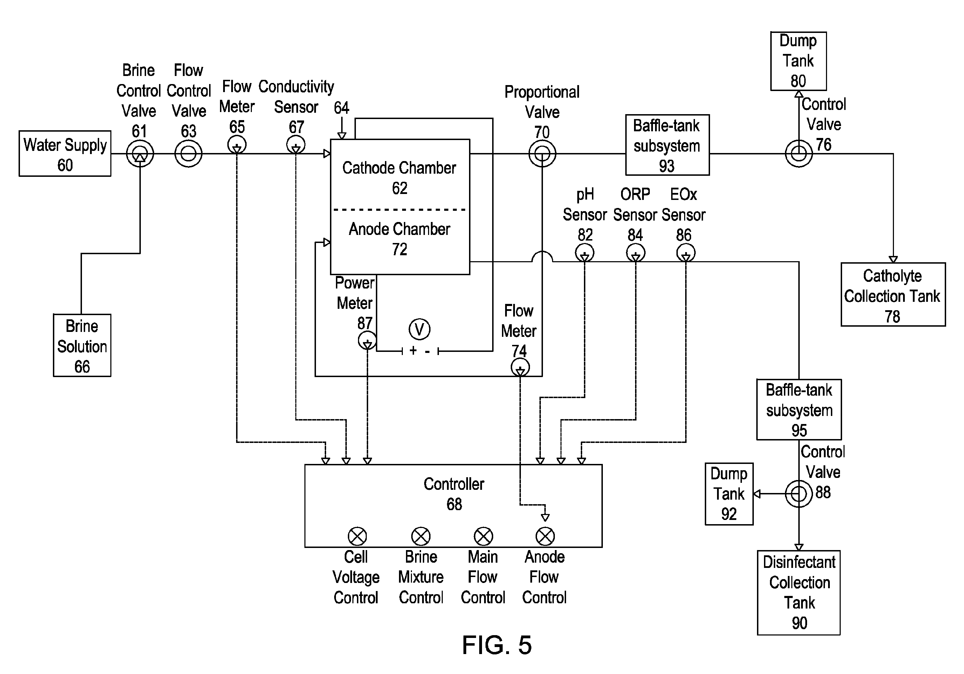

Figure 5 illustrates an automated electrolytic plant (system). By fully automating the electrolysis process, a user can eliminate waste and the need for extra manpower when producing an electrolyzed solution. Preferably, a water supply 60 is connected to the cathode chamber 62 of at least one electrolytic cell 64 that is energized at a predetermined and monitored voltage. Preferably, the cell is energized at about 24 volts DC. Prior to reaching the cathode chamber 62, the water passes a brine control valve 61, which opens to add brine solution 66 to the water to make up a salinated flow having a predetermined NaCl concentration. The salinated flow then passes a flow sensor 65 and a conductivity sensor 67. The flow sensor effectively measures the flow into the cathode chamber 62, and the electrical conductivity sensor effectively measures the conductivity of the salinated flow, which is a function of the brine concentration in water. Both sensors transmit data back to a controller 68. The sensor data transmission can be accomplished by wire or wirelessly, such as RF or optical methods.

After passing the conductivity sensor 67, the salinated flow then enters the energized cathode chamber 62 of the electrolytic cell to produce a catholytic flow. As the catholytic flow exits the cathode chamber 62 it reaches a valve 70, which, depending on its position, allows a predetermined volume of the catholytic flow to pass while diverting the other portion of the flow into the energized anode chamber 72 of the cell. The non-diverted portion of the catholytic flow passes through a first control valve 76, which feeds it into either a catholyte collection tank 78 or a dump tank 80.

The diverted portion of the catholytic flow passes a flow sensor 74, which reads the flow and transmits the flow rate back to the controller 68, and enters the anode chamber 72. As this diverted flow passes through the energized anode chamber 72, it becomes the disinfectant. As the disinfectant leaves the anode chamber, it passes a pH sensor 82, an oxidation reduction potential (ORP) sensor 84, and an oxidation level sensor 86, which all transmit their respective data back to the controller 68. The disinfectant finally reaches a second control valve 88, which feeds it into either a disinfectant collection tank 90 or a dump tank 92.

Before both the catholytic flow and disinfectant reach their respective holding tanks they pass through baffle-tank subsystems 93 and 95 in order to undergo off-gassing. These systems include a flow control valve, a baffle tank, and a re-pressurization pump.

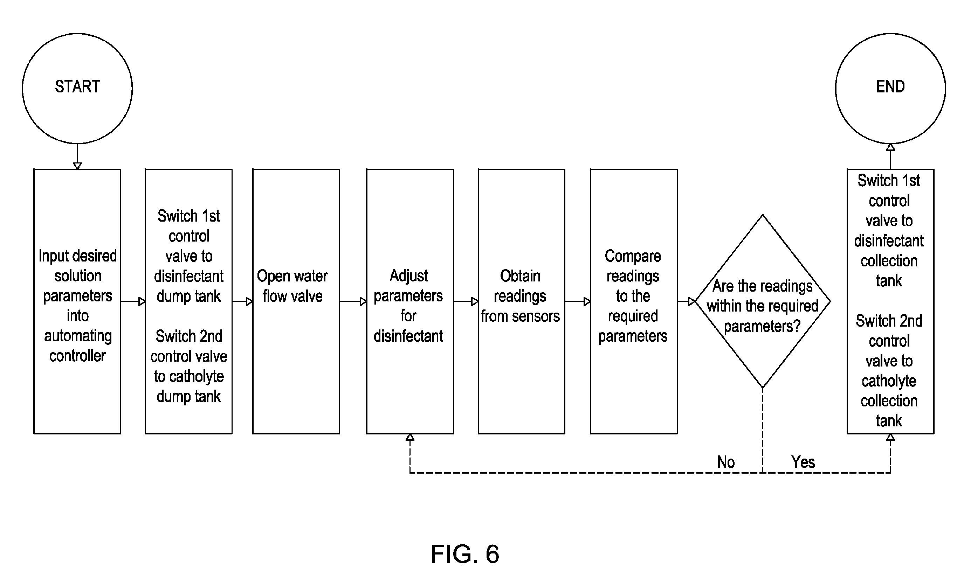

When the electrolytic system is started up, both the first and second control valves (76 and 88), are set to feed the flow to the dump tanks 80 and 92. The flow parameters are measured via the various sensors (65, 67, 74, 82, 84, 86) including a voltage or power meter 87, which transmit data back to the controller 68. Using an algorithm shown in Figure 6, the controller 68 is able to analyze the data and adjust the brine control valve 61, flow control valve 63, the proportional valve 70, or the current for a predetermined voltage across the cell 64 (controlling the power draw across the cell) to produce a solution having the specific properties desired by the user. When the desired properties are reached, the control valves 76 and 88 are automatically switched to feed the flows into the catholyte collection tank 78 and the disinfectant collection tank 90, respectively. In the preferred embodiment, the controller 68 can be a general purpose computer programmed to implement the algorithm shown in Figure 6. In the alternative, the controller can be a microprocessor or a semiconductor circuit designed to implement the algorithm shown in Figure 6.

When the system in Figure 5 includes more than one electrolytic cell 64, to prolong the longevity of the system, the automated controller 68 can equalize the amount of time each cell is in use. This is accomplished by the controller determining the required number cells for the current operation and the total time of prior use for each cell in the system. If this analysis results in the controller determining that not all of the available cells need to be used for the current operation, the controller turns on the cells that have the lowest total time of prior use.

Also, if one of the cells fails, the system can react to that failure by sealing the failed cell and diverting the flow to an unused but functional cell without having to stop the electrolysis process.

## Claims

1. A multi-chamber electrolytic cell comprising:
an inner electrode having a cylindrical shape;
a first diaphragm positioned co-axially around the Inner electrode to form a first chamber within, the first diaphragm having a top, a bottom, an inner wall, and
an outer wall;
a middle electrode, positioned co-axially around the first diaphragm to form a
second chamber within, the middle electrode having a top, a bottom, an inner wall, and an outer wall;
a second diaphragm positioned co-axially around the middle electrode to form a third chamber within, the second diaphragm having a top, a bottom, an inner wall and an outer wall;
an outer electrode, positioned co-axially around the second diaphragm to form a fourth chamber within, the outer electrode having a top, a bottom, an inner wall, and an outer wall;
a first dielectric end-cap sealing the bottoms of the first and second
diaphragms, the inner electrode, the middle electrode, and the outer electrode, the first dielectric end-cap including a first bottom-flow port, a second bottom-flow port, a third bottom-flow port, and a fourth bottom-flow port, the first, second, third and forth bottom-flow ports positioned on a side of the first dielectric cap and communicating with the corresponding first, second, third, and fourth chambers of the electrolytic cell; and
a second dielectric end-cap sealing the tops of the first and second
diaphragms, the inner electrode, the middle electrode, and the outer electrode, the second dielectric end-cap including a first top-flow port, a second top-flow port, a third top-flow port, and a fourth top-flow port positioned on a side of the second dielectric end-cap, the first, second, third and fourth top-flow ports communicating with the corresponding first, second, third, and fourth chambers of the electrolytic cell;
wherein the inner electrode and the middle electrode are designed for having a first voltage across them, the first voltage being of sufficient value to create an electrolytic reaction In the first and second chambers, and
wherein the outer electrode and the middle electrode are designed for having a second voltage across them, the second voltage being of sufficient value to create an electrolytic reaction in the third and fourth chambers.

2. The device of claim 1, wherein the first voltage is equal to the second voltage.

3. The device of claim 1, wherein the end-caps are monolithic.

4. The device of claim 3, wherein the end-caps have grooves to allow for precision fitting of the electrodes and diaphragms.

5. The device of claim 4, wherein the end-caps are identical.

6. The device of claim 1, wherein the inner electrode is a cathode, the middle electrode is an anode, and the outer electrode is a cathode.

7. The device of claim 1, wherein the inner electrode is an anode, the middle electrode is a cathode, and the outer electrode is an anode.

8. The device of claim 1, wherein the outside wall of the outer electrode is coated with a dielectric material.

9. The device of claim 8, wherein the dielectric material is polyolefin.

10. The device of claim 1, wherein the electrodes have a sealing surface finish of approximately 1.6 Ra.

11. The device of claim 1, wherein the electrodes are made of titanium.

12. The device of claim 1, wherein the diaphragms are made of zirconia ceramic.

## Patentansprüche

1. Eine Mehrkammer-Elektrolysezelle, die Folgendes umfasst:
eine innere Elektrode mit einer zylindrischen Form;
eine erste Membran, die koaxial um die innere Elektrode positioniert ist, um eine erste Kammer darin zu bilden, wobei die erste Membran einen oberen Teil,
einen unteren Teil, eine Innenwand und eine Außenwand aufweist;
eine mittlere Elektrode, die koaxial um die erste Membran positioniert ist, um eine zweite Kammer darin zu bilden, wobei die mittlere Elektrode einen oberen Teil, einen unteren Teil, eine Innenwand und eine Außenwand aufweist;
eine zweite Membran, die koaxial um die mittlere Elektrode positioniert ist, um eine dritte Kammer darin zu bilden, wobei die zweite Membran einen oberen Teil, einen unteren Teil, eine Innenwand und eine Außenwand aufweist;
eine äußere Elektrode, die koaxial um die zweite Membran positioniert ist, um eine vierte Kammer darin zu bilden, wobei die äußere Elektrode einen oberen Teil, einen unteren Teil, eine Innenwand und eine Außenwand aufweist;
eine erste dielektrische Endkappe, die die unteren Teile der ersten und der zweiten Membran, der inneren Elektrode, der mittleren Elektrode und der äußeren Elektrode verschließt, wobei die erste dielektrische Endkappe einen ersten Unterlaufanschluss, einen zweiten Unterlaufanschluss, einen dritten Unterlaufanschluss und einen vierten Unterlaufanschluss umfasst, wobei der erste, der zweite, der dritte und der vierte Unterlaufanschluss an einer Seite der ersten dielektrischen Kappe positioniert sind und mit der entsprechenden ersten zweiten, dritten und vierten Kammer der Elektrolysezelle in Verbindung stehen;
und
eine zweite dielektrische Endkappe, die die oberen Teile der ersten und der zweiten Membran, der inneren Elektrode, der mittleren Elektrode und der äußeren Elektrode verschließt, wobei die zweite dielektrische Endkappe einen ersten Oberlaufanschluss, einen zweiten Oberlaufanschluss, einen dritten Oberlaufanschluss und einen vierten Oberlaufanschluss umfasst, die an einer Seite der zweiten dielektrischen Endkappe positioniert sind, wobei der erste, der zweite, der dritte und der vierte Oberlaufanschluss mit der entsprechenden ersten, zweiten, dritten und vierten Kammer der Elektrolysezelle in Verbindung stehen;
wobei die innere Elektrode und die mittlere Elektrode dazu ausgelegt sind, dass eine erste Spannung an ihnen anliegt, wobei die erste Spannung einen ausreichenden Wert aufweist, um eine Elektrolysereaktion in der ersten und der zweiten Kammer zu erzeugen, und
wobei die äußere Elektrode und die mittlere Elektrode dazu ausgelegt sind, dass eine zweite Spannung an ihnen anliegt, wobei die zweite Spannung einen ausreichenden Wert aufweist, um eine Elektrolysereaktion in der dritten und der vierten Kammer zu erzeugen.

2. Vorrichtung nach Anspruch 1, wobei die erste Spannung gleich der zweiten Spannung ist.

3. Vorrichtung nach Anspruch 1, wobei die Endkappen monolithisch sind.

4. Vorrichtung nach Anspruch 3, wobei die Endkappen Nuten aufweisen, um die präzise Montage der Elektroden und Membranen zu ermöglichen.

5. Vorrichtung nach Anspruch 4, wobei die Endkappen identisch sind.

6. Vorrichtung nach Anspruch 1, wobei es sich bei der inneren Elektrode um eine Kathode handelt, es sich bei der mittleren Elektrode um eine Anode handelt und es sich bei der äußeren Elektrode um eine Kathode handelt.

7. Vorrichtung nach Anspruch 1, wobei es sich bei der inneren Elektrode um eine Anode handelt, es sich bei der mittleren Elektrode um eine Kathode handelt und es sich bei der äußeren Elektrode um eine Anode handelt.

8. Vorrichtung nach Anspruch 1, wobei die Außenwand der äußeren Elektrode mit einem dielektrischen Material beschichtet ist.

9. Vorrichtung nach Anspruch 8, wobei es sich bei dem dielektrischen Material um Polyolefin handelt.

10. Vorrichtung nach Anspruch 1, wobei die Elektroden eine Oberflächendichtungsbeschaffenheit von ungefähr 1,6 Ra aufweisen.

11. Vorrichtung nach Anspruch 1, wobei die Elektroden aus Titan hergestellt sind.

12. Vorrichtung nach Anspruch 1, wobei die Membranen aus Zirkonkeramik hergestellt sind.

## Revendications

1. Une cellule électrolytique à chambres multiples comprenant :
une électrode intérieure possédant une forme cylindrique,
un premier diaphragme positionné coaxialement autour de l'électrode intérieure de façon à former une première chambre à l'intérieur de celui-ci, le premier diaphragme possédant une partie supérieure, une partie inférieure, une paroi interne et une paroi extérieure,
une électrode médiane positionnée coaxialement autour du premier diaphragme de façon à former une deuxième chambre à l'intérieur de celle-ci, l'électrode médiane possédant une partie supérieure, une partie inférieure, une paroi interne et une paroi extérieure,
un deuxième diaphragme positionné coaxialement autour de l'électrode médiane de façon à former une troisième chambre à l'intérieur de celui-ci, le deuxième diaphragme possédant une partie supérieure, une partie inférieure, une paroi interne et une paroi extérieure,
une électrode extérieure positionnée coaxialement autour du deuxième diaphragme de façon à former une quatrième chambre à l'intérieur de celle-ci, l'électrode extérieure possédant une partie supérieure, une partie inférieure, une paroi interne et une paroi extérieure,
un premier capuchon d'extrémité diélectrique scellant les parties inférieures des premier et deuxième diaphragmes, de l'électrode intérieure, de l'électrode médiane et de l'électrode extérieure, le premier capuchon d'extrémité diélectrique comprenant un premier orifice d'écoulement inférieur, un deuxième orifice d'écoulement inférieur, un troisième orifice d'écoulement inférieur et un quatrième orifice d'écoulement inférieur, les premier, deuxième, troisième et quatrième orifices d'écoulement inférieurs étant positionnés sur un côté du premier capuchon diélectrique et communiquant avec les première, deuxième, troisième et quatrième chambres correspondantes de la cellule électrolytique, et
un deuxième capuchon d'extrémité diélectrique scellant les parties supérieures des premier et deuxième diaphragmes, de l'électrode intérieure, de l'électrode médiane et de l'électrode extérieure, le deuxième capuchon d'extrémité diélectrique comprenant un premier orifice d'écoulement supérieur, un deuxième orifice d'écoulement supérieur, un troisième orifice d'écoulement supérieur et un quatrième orifice d'écoulement supérieur positionnés sur un côté du deuxième capuchon d'extrémité diélectrique, les premier, deuxième, troisième et quatrième orifices d'écoulement supérieurs communiquant avec les première, deuxième, troisième et quatrième chambres correspondantes de la cellule électrolytique,
où l'électrode intérieure et l'électrode médiane sont conçues de façon à posséder une première tension sur celles-ci, la première tension étant d'une valeur suffisante pour créer une réaction électrolytique dans les première et deuxième chambres, et
où l'électrode extérieure et l'électrode médiane sont conçues de façon à posséder une deuxième tension sur celles-ci, la deuxième tension étant d'une valeur suffisante pour crééer une réaction électrolytique dans les troisième et quatrième chambres.

2. Le dispositif selon la Revendication 1 où la première tension est égale à la deuxième tension.

3. Le dispositif selon la Revendication 1, où les capuchons d'extrémité sont monolithiques.

4. Le dispositif selon la Revendication 3, où les capuchons d'extrémité possèdent des rainures destinées à permettre un ajustement de précision des électrodes et des diaphragmes.

5. Le dispositif selon la Revendication 4, où les capuchons d'extrémité sont identiques.

6. Le dispositif selon la Revendication 1, où l'électrode intérieure est une cathode, l'électrode médiane est une anode et l'électrode extérieure est une cathode.

7. Le dispositif selon la Revendication 1, où l'électrode intérieure est une anode, l'électrode médiane est une cathode et l'électrode extérieure est une anode.

8. Le dispositif selon la Revendication 1, où la paroi extérieure de l'électrode extérieure est enduite avec un matériau diélectrique.

9. Le dispositif selon la Revendication 8, où le matériau diélectrique est de la polyoléfine.

10. Le dispositif selon la Revendication 1, où les électrodes possèdent une finition de surface d'étanchéité d'approximativement 1,6 Ra.

11. Le dispositif selon la Revendication 1, où les électrodes sont composées de titane.

12. Le dispositif selon la Revendication 1, où les diaphragmes sont composés de céramique de zirconium.
